# EUROPEAN PATENT SPECIFICATION

(11) **EP 3 409 428 B1**
(45) Date of publication and mention of the grant of the patent: **14.02.2024**
(21) Application number: 16887873.4
(22) Date of filing: 26.01.2016
(51) Int. Cl.: B25J 9/22, B25J 9/16, G05B 19/418

(54) **WORK SYSTEM COMPRISING A JOB CREATION DEVICE AND A WORK ROBOT CONTROL DEVICE**
ARBEITSSYSTEM, UMFASSEND EINE AUFTRAGSERZEUGUNGSVORRICHTUNG UND EINE ARBEITSROBOTERSTEUERUNGSVORRICHTUNG
SYSTÈME DE TRAVAIL COMPRENANT UN DISPOSITIF DE CRÉATION DE TÁCHE ET UNE COMMANDE DE ROBOT DE TRAVAIL

(43) Date of publication of application: 05.12.2018
(73) Proprietor: Fuji Corporation, Chiryu-shi, Aichi 472-8686 (JP)
(72) Inventor: NAGATA, Ryo, Chiryu, Aichi, (JP); FUJITA, Masatoshi, Chiryu, Aichi, (JP); FUKUMOTO, Ryohei, Chiryu, Aichi, (JP); KODAMA, Seigo, Chiryu, Aichi, (JP)
(74) Representative: Grünecker Patent- und Rechtsanwälte PartG mbB
(86) International application number: PCT/JP2016/052111
(87) International publication number: WO 2017/130286

(56) References cited:
- JP-A- H1 153 020
- JP-A- S6 190 205
- JP-A- H08 202 427
- JP-A- S60 205 713
- JP-A- 2002 127 054
- US-A- 5 272 641
- US-A- 5 822 210
- US-A1- 2006 178 778
- US-B1- 6 292 715

## Description

### Technical Field

The present invention relates to a work system comprising a job creation device and a work robot control device.

### Background Art

Conventionally, there are data conversion and management systems that include a database that separately memorizes circuit board data that is shared for component mounting, and mounter management data that varies depending on the type of mounter and component, and that create a program for making a mounting machine perform actual mounting work from the circuit board data and the mounter management data memorized in the database. The data conversion and management system acquires design data such as component types to be mounted on a board, mounting positions, and mounting angles from figures of a CAD device or the like, converts the data into circuit board data, and memorizes the data in a database. Also, the data conversion and management system memorizes component types (component names) of components stored in each storage case in a storage section of the mounter, mounting position correction data for correcting the position at which a component is mounted on a board due to variance in the like of component characteristics, and mounter specific data (vision processing data) as mounter apparatus management data in the database.

Related background art is disclosed, for example, in JP-A-H9-309034, US 5 272 641 A, US 5 822 210 A, US 6 292 715 B1 and US 2006/178778 A1.

### Summary of Invention

However, with the above system, although circuit board data and mounter management data are memorized and managed separately, an operation program for causing mounters to perform mounting work must be created separately each time, so there is further room for improvement.

An object of the present invention is to cause a work robot to perform appropriate work on a work target while reducing a workload of an operator.

The present invention provides a work system as defined in claim 1, in order to achieve the above object.

A work system of the present invention is provided with a job creation device and a work robot control device. The job creation device memorizes in advance an operation program including operation contents to be performed by a work robot, the operation program being memorized in a state in which it is possible to reference work-target-related data related to a work target. And, the job creation device acquires the work-target-related data, creates a job including the memorized operation program and the acquired work-target-related data and outputs the job to the work robot control device. The work robot control device receives the job including the memorized operation program and the acquired work-target-related data, and controls the work robot by executing the operation program included in the received job while referencing the work-target-related data included in the job. Accordingly, a user is able to cause the work robot to perform work appropriate to the work target simply by changing the work-target-related data referenced by the program. As a result, the work system causes the work robot to perform appropriate work on a work target while reducing the workload of the operator.

### Brief Description of Drawings

Fig. 1

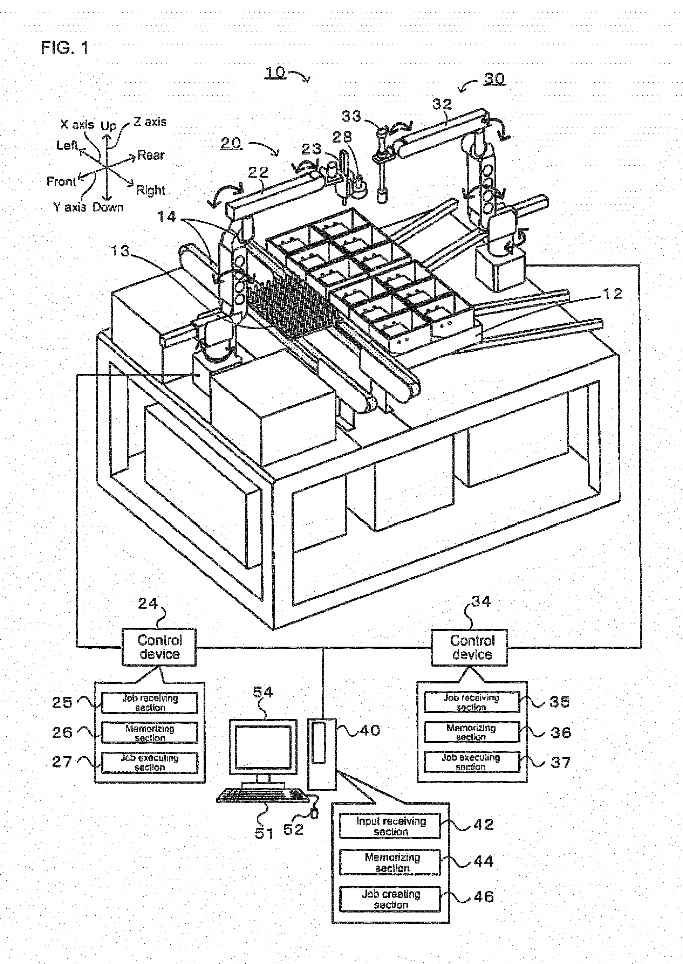

   Fig. 1 schematically shows the configuration of work system 10 as an embodiment of the present invention.
Fig. 2

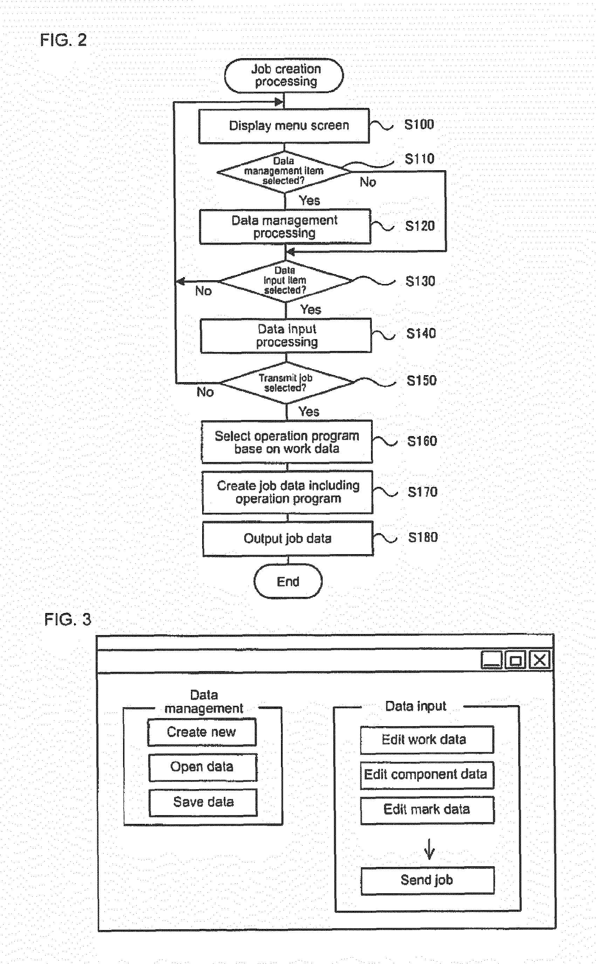

   Fig. 2 is a flowchart showing an example of job creation processing performed by management device 40.
Fig. 3
   Fig. 3 shows an example of a menu screen.
Fig. 4

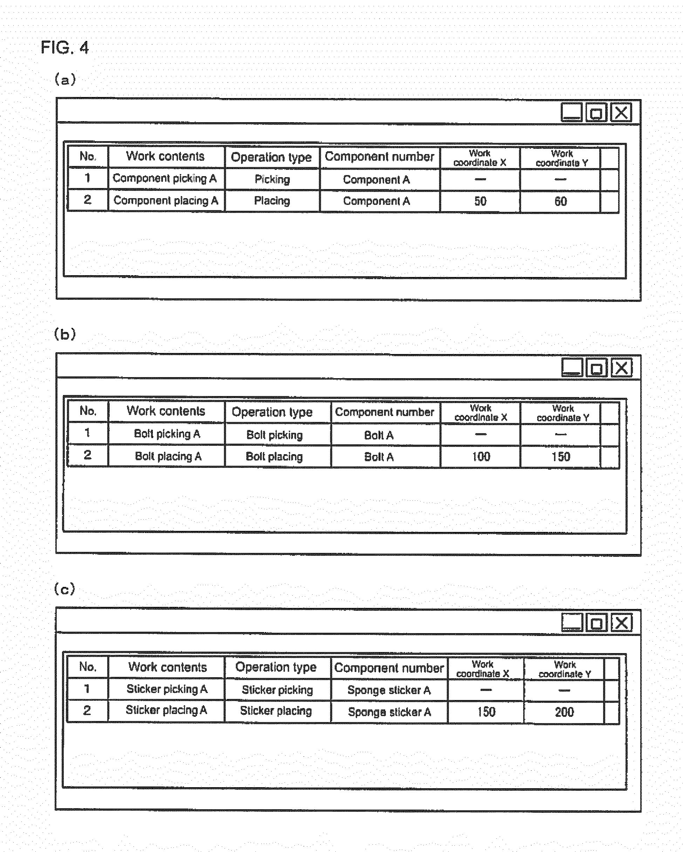

   Fig. 4 shows an example of a work data input screen.
Fig. 5

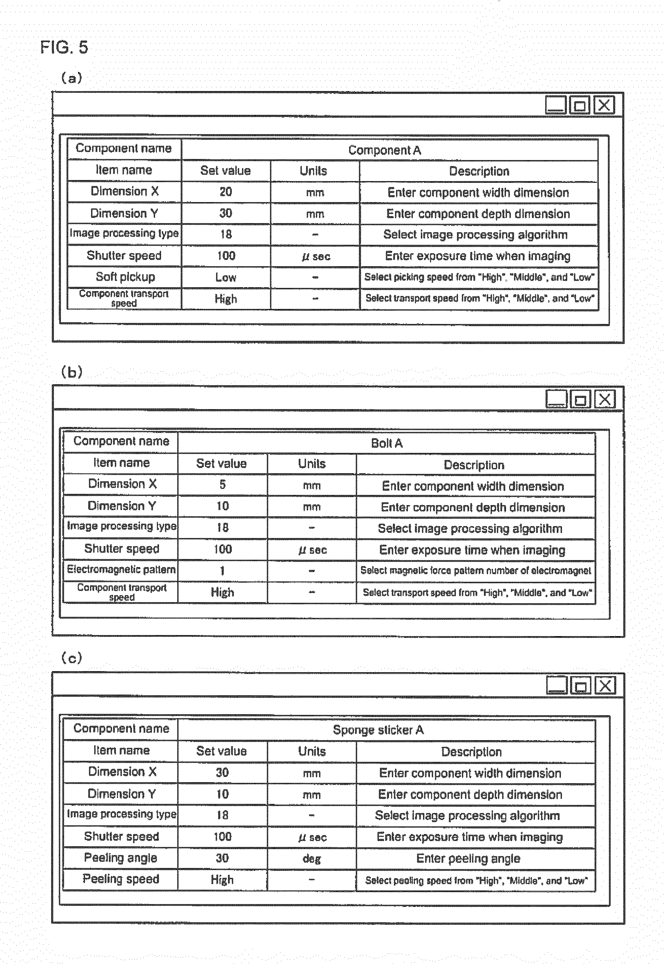

   Fig. 5 shows a component data input screen.
Fig. 6

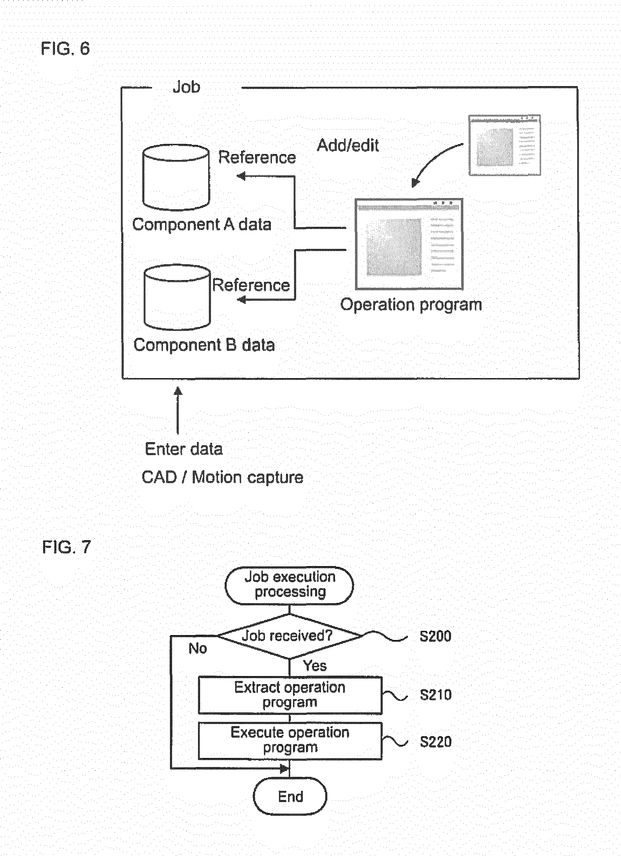

   Fig. 6 shows the configuration of job data.
Fig. 7
   Fig. 7 is a flowchart showing an example of job execution processing performed by control device 24 and 34.
Fig. 8

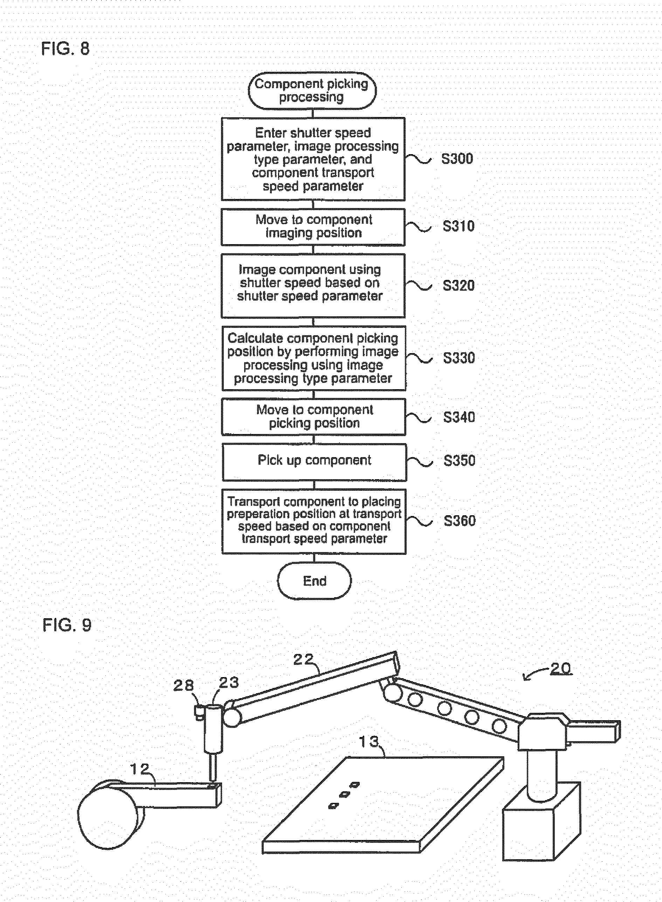

   Fig. 8 is a flowchart showing an example of component picking processing.
Fig. 9
   Fig. 9 shows work robot 20 during component picking work.
Fig. 10

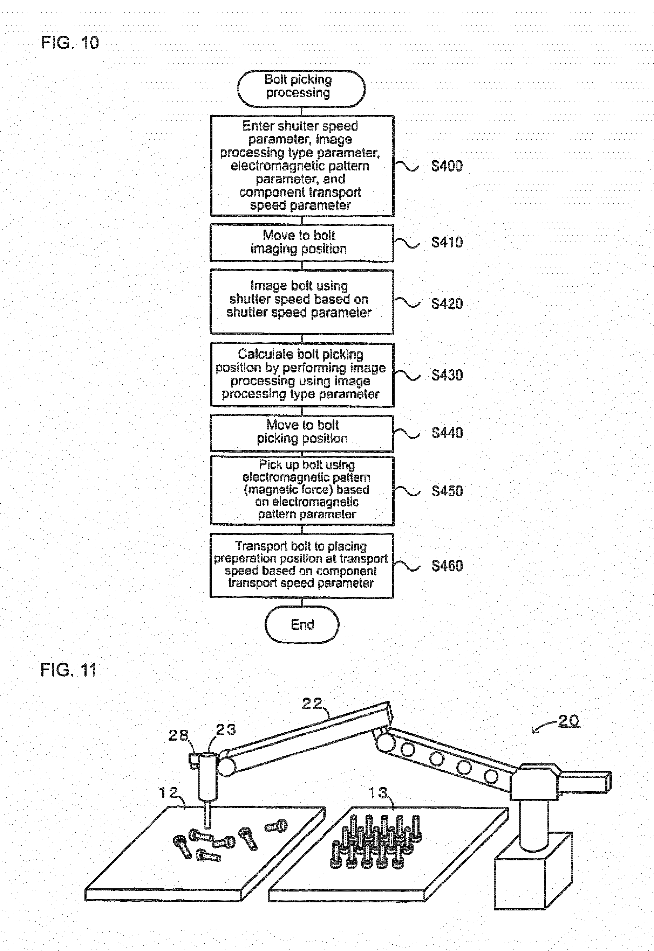

   Fig. 10 is a flowchart showing an example of bolt picking processing.
Fig. 11
   Fig. 11 shows work robot 20 during bolt picking work.
Fig. 12

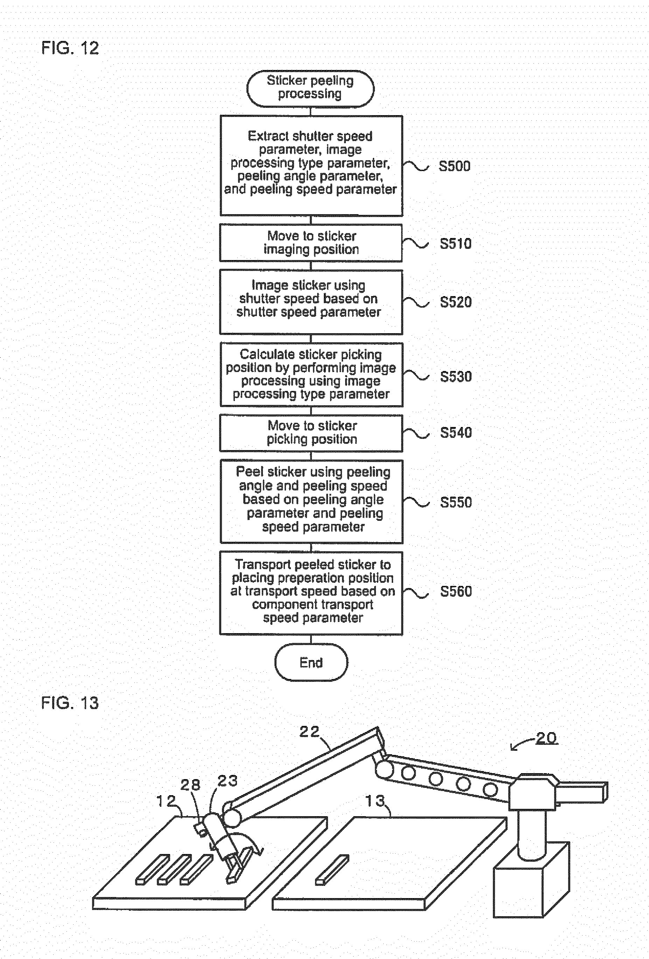

   Fig. 12 is a flowchart showing an example of sticker peeling processing.
Fig. 13
   Fig. 13 shows work robot 20 during sticker peeling work.
Fig. 14

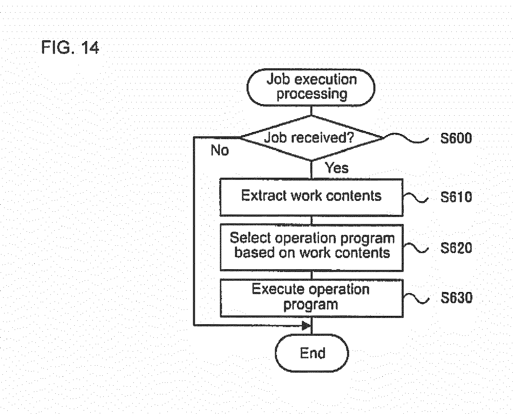

   Fig. 14 is a flowchart showing job execution processing of an alternative embodiment.

### Description of Embodiments

Embodiments of the present invention are described below with reference to the figures.

Fig. 1 schematically shows the configuration of work system 10 as an embodiment of the present invention. Note that, in fig. 1, the left-right direction is the X-axis direction, the front-rear direction is the Y-axis direction, and the up-down direction is the Z-axis direction. As shown, work system 10 of the present embodiment is provided with: supply device 12 that supplies components (work); conveyance device 14 that conveys loading member 13 on which the components are loaded; two work robots, 20 and 30, arranged facing each other on either side of conveyance device 14; and management device 40 that performs overall management of the work system. Examples of "components (work)" include mechanical components, electronic components, electrical components, and chemical components. Examples of "loading" include mounting, arranging, assembling, inserting, fastening, and so on.

For supply device 12, an item appropriate for the types of components being supplied is used. For example, the following may be used: an item (tape feeder or tray feeder) that supplies electronic components by feeding tape in which electronic components (IC chips, resistors, capacitors, or the like) are stored at regular intervals or trays in which electronic components are arranged in rows; an item that supplies mechanical components (such as bolts or screws) by conveying a storage section that stores the mechanical components; or an item that supplies an adhesive object (such as a sponge sticker) by conveying a sheet to which the adhesive object is attached.

Conveyance device 14 is configured from a belt conveyor device and conveys loading member 13 into a work area of work robot 20 and 30 and fixes the conveyed loading member 13.

Work robots 20 and 30 are respectively provided with robot arms 22 and 32, and control devices 24 and 34 that perform drive control of robot arms 22 and 32. Work robots 20 and 30 receive a job including an operation program from management device 40, extract the operation program from the received job, and execute the operation program so as to perform various work. For example, work may include: picking up a component supplied by supply device 12 and loading the component at a specified position on loading member 13; picking up a mechanical component supplied by supply device 12 and arranging the component in a row on loading member 13; picking up a fastening component (such as a bolt or screw) supplied by supply device 12 and using the fastening component to fasten multiple members loaded on loading member 13; or peeling a sponge sticker from a sheet supplied by supply device 12 and loading the sticker on loading member 13.

Robot arms 22 and 32 are configured as multi-jointed robot arms. Each joint is able to pivot or rotate in directions shown by arrows in fig. 1 by the driving of motors, which are not shown. Tools 23 and 33 are attached to an end section of robot arms 22 and 32, and tools 23 and 33 pick up a component (work) supplied by supply device 12, and load the picked up components on loading member 13 conveyed by conveyance device 14. The end section of robot arms 22 and 32 is configured such that tools 23 and 33 can be removed, and tools 23 and 33 are exchanged in accordance with the type of component to be picked up. Examples of tools 23 and 33 include mechanical chucks that pick up a component by gripping the component, electromagnetic chucks that pick up a component that includes a magnetic body using magnetic force, and a suction nozzle that picks up a component using suction force.

Also, imaging camera 28 for imaging the component as a work target and detecting the position and orientation of the component is provided on the end section of robot arm 22.

Control devices 24 and 34 are configured from a microprocessor including a CPU, ROM, RAM, an HDD, an input-output port, and a communication port. Control devices 24 and 34 are capable of communication with management device 40 via a communication port and perform exchange of various types of data with management device 40. Control devices 24 and 34 are respectively provided with job receiving sections 25 and 35, memorizing sections 26 and 36, and job executing sections 27 and 37 as functional blocks. Job receiving sections 25 and 35 receive a job sent from management device 40 via the communication port. Memorizing sections 26 and 36 are configured from an HDD or the like and memorize correction parameters for correcting an error that affects the positioning accuracy of robot arms 22 and 32 (such as an assembly variance error or a processing variance error). Job executing sections 27 and 37 perform drive control of robot arms 22 and 32 by executing a job received from job receiving sections 25 and 35. A rotation position and a revolving position and so on from position sensors, which are not shown, provided at each joint are received by control devices 24 and 34 (job executing sections 27 and 37) via an input port. Also, image signals from imaging camera 28 attached to the end section of robot arm 22 are received by control device 24 (job executing section 27). Also, drive signals and the like to motors, which are not shown, that drive the joints of robot arms 22 and 32 are output from control devices 24 and 34 (job executing sections 27 and 37).

Management device 40 is a general purpose computer including a CPU, ROM, RAM, an HDD, an input-output port, and a communication port, and is connected to entry devices such as keyboard 51 and mouse 52 and an output device such as display 54 via the input-output port. Management device 40 is provided with input receiving section 42, memory section 44, and job creating section 46 as function blocks. Input receiving section 42 receives inputs of data (work data and component data, which are described later) from a user via an input device. Memory device 44 is configured from an HDD or the like, and memorizes data received from input receiving section 42, an operation program including work contents to be performed by work robots 20 and 30, and the like. Job creating section 46 creates a job with work instructions for each of the two work robots 20 and 30.

Operation of the above mounting system 10 is described next. First, operation of management device 40 is described, then operation of work robots 20 and 30 is described.

Fig. 2 is a flowchart showing an example of job creation processing performed by job creating section 46 of management device 40. This processing is performed when an operator instructs the job creating program to start.

When the job creating processing is performed, job creating section 46 displays a menu screen so as to receive input of various types of data (S100). Fig. 3 shows an example of a menu screen. As shown, the menu screen includes a "Data management" section and a "Data input" section. The following buttons are provided in the "Data management section": a "Create new" button for setting a file name for managing created job data; an "Open data" button for reading created job data; and a "Save data" button for saving the job data being edited in a specified folder location. Also, the following buttons are provided in the "Data input" section: an "Edit data button" for displaying a work data input screen; an "Edit component data" button for displaying a component data input screen; an "Edit mark data" button for displaying a mark data input screen"; and a "Send job" button for creating and saving the job file from the specified data and sending a job file to the corresponding work robots 20 and 30. An operator can select a desired button by using an input device (mouse 52) to align a cursor and then click.

Job creating section 46, when a data management button is selected (S110), performs data management processing (S120). Processing of step S120 is performed by performing data management processing corresponding to the selected button among "Create new", "Open data", and "Save data".

Also, job creating section 46, when a data input button is selected (S130), performs data input processing (S140). Processing of step S140 is performed by performing data input processing corresponding to the selected button among "Edit work data", "Edit component data", "Edit mark data", and so on.

Here, job creating section 46, when "Edit work data" is selected, displays the work data input screen to allow the input and editing of work data. With "Edit work data", work contents corresponding to a supply component are registered for each work robot to perform work.

An example of a work data input screen is shown in fig. 4. As shown in fig. 4, the work data input screen includes input fields such as "Work contents", "Operation type", "Component number (component name)", "Work coordinate X", and "Work coordinate Y". With "Work contents" and "Operation type", for example, input is possible by selecting an item from a drop-down list. In the work data input screen of fig. 4(a), an example is shown by which work robot 20 will perform work of picking up component A (component picking A), and work of loading the picked up component A at work coordinates (X, Y) (component placing A). In the work data input screen of fig. 4(b), an example is shown by which work robot 20 will perform work of picking up bolt A (bolt picking A), and work of loading the picked up bolt A at work coordinates (X, Y) (bolt placing A). In the work data input screen of fig. 4(c), an example is shown by which work robot 20 will perform work of peeling sponge sticker A (sticker picking A) from a sheet to which it is attached, and work of loading the picked up sponge sticker A at work coordinates (X, Y) (sticker placing A). Note that, work data (for example, "Component data", "Work position X", or "Work position Y") may be read from figure data of a CAD device. Also, it is possible to register a movement path of a component or robot arm 22 and 32 from picking up the supplied component to the work coordinates (X, Y) in the work data by inputting motion capture information for each work and each component.

Further, job creating section 46, when "Edit component data" is selected, displays the component data input screen to allow input and editing of component data. In "Edit component data", information related to supplied components to be used in work (for example, supplied component related data such as "Shape"), and information related to supply of components (for example, supplied component related data such as "Component supply type" and "Component supply position"), can be set.

An example of a component data input screen is shown in fig. 5. As shown in fig. 5, the component data input screen displays different input fields for each "Component number (component name)" selected in the work data input screen. For example, when component A is selected as a component, as shown in fig. 5(a), fields such as "Dimension X" for entering the width of the outline of the component, "Dimension Y" for entering the depth of the outline of the component, "Image processing type" for entering the image processing algorithm used to process the image captured by imaging camera 28, "Shutter speed" for entering the exposure time during imaging, "Soft pickup" for entering the component pickup speed, "Component transport speed" for entering the transport speed for the picked up component, "Component supply position" (not shown), and so on are displayed. Further, when bolt A is selected as a component, as shown in fig. 5(b), in addition to "Dimension X", "Dimension Y", "Image processing type", "Shutter speed", input fields such as "Electromagnetic pattern" for entering the magnetic pattern when picking up bolt A with an electromagnetic chuck, "Component transport speed", and "Component supply position" (not shown) are displayed. Further, when sponge sticker A is selected as a component, as shown in fig. 5(c), in addition to "Dimension X", "Dimension Y", "Image processing type", "Shutter speed", and "Component transport speed", input fields such as "Peeling angle" for entering the inclination angle when peeling both sides of sponge sticker A while gripping the sticker with a mechanical chuck and inclining the mechanical chuck, "Peeling speed" for entering the operation speed of the mechanical chuck when peeling sponge sticker A, and "Component supply position" (not shown) are displayed. Note that, component data (for example, "Dimension X", and "Dimension Y") may be read from figure data of a CAD device. Also, with "Image processing type", "Soft pickup", "Component transport speed", "Electromagnetic pattern", "Peeling speed", and so on, for example, input is possible by selecting an item from a drop-down list.

Job creating section 46, when "Edit mark data" is selected, displays the mark data input screen to allow input and editing of component data. In "Edit mark data", for example, marks used for positional correction related to a conveyance position of loading member 13 may be registered.

Job creating section 46, when "Transmit job" is selected (S150), selects a corresponding operation program from the multiple operation programs memorized in memory section 44 based on the entered work data ("Work contents") (S160). Then, job creating section 46 creates a job including the selected operation program, the work data, the component data, and the mark data (S170), sends the job to the corresponding control devices 24 and 34 (S180), and ends job creation processing.

Fig. 6 illustrates the configuration of a job. As shown, a job is configured from work data (work contents) entered during S130 and S140 of job creation processing, component-use data (component A data, component B data) including component data and the like, and an operation program. The operation program includes operation contents to be performed by work robots 20 and 30, such that work robots 20 and 30 can be made to perform appropriate work on a supplied component (work) while referencing the component-use data. The operation program can be appropriately added to or edited by an operator to add more work to be performed by work robots 20 and 30 (work contents that can be selected by an operator using "Edit work data"), or to improve the operating accuracy of work robots 20 and 30.

Next, operation of work robots 20 and 30 is described. Fig. 7 is a flowchart showing an example of job execution processing performed by job executing sections 27 and 37 of control devices 24 and 34.

When job execution processing is performed, job executing sections 27 and 37 of control devices 24 and 34, first, determine whether a job has been received from management device 40 (S200). Job executing sections 27 and 37, if determining that a job has not been received, end job execution processing, but if determining that a job has been received, extract the operation program from the received job (S210), execute the extracted operation program (S220), and then end job execution processing.

In this manner, job execution processing sections 27 and 37 receive the operation program corresponding to the work contents entered by an operator from management device 40 and execute the operation program. Job executing sections 27 and 37, for example, when receiving an operation program with component picking processing and component placing processing from management device 40, sequentially perform component picking processing and component placing processing; when receiving an operation program with bolt picking processing and bolt placing processing, sequentially perform bolt picking processing and bolt placing processing; and when receiving an operation program with sticker peeling processing and sticker placing processing, sequentially perform sticker peeling processing and sticker placing processing. Hereinafter cases when job executing section 27 performs each of component picking processing, bolt picking processing, and sticker peeling processing are described.

Fig. 8 is a flowchart showing an example of component picking processing. When job executing section 27 performs component picking processing, as a tool 23 capable of holding a component, a suction nozzle or mechanical chuck is attached to a tip section of robot arm 22. Note that, attaching of tool 23 may be performed manually by an operator, or automatically by the tip of robot arm 22 being moved to nozzle station in which multiple types of tools 23 are stored.

When component picking processing is performed, job executing section 27, first, performs processing for entering various parameters required for processing such as a shutter speed parameter, an image processing type parameter, and a component transport speed parameter (S300). Here, the shutter speed parameter, the image processing type parameter, and the component transport speed parameter are entered based on the settings specified in "Shutter speed", "Image processing type", and "Component transport speed" respectively.

Job executing section 27, when this data has been entered, moves imaging camera 28 provided on the tip of the arm to the supplied component imaging position (S310), and images the supplied component with imaging camera 28 using a shutter speed based on the entered shutter speed parameter (S320).

Next, job executing section 27 calculates the component picking position by performing image processing on the captured image based on the entered image processing type parameter (S330). Here, the component picking position may be calculated by taking the component supply position obtained from the image processing and correcting it by a correction parameter that cancels an error of robot arm 22. Then, job executing section 27, after moving tool 23 (suction nozzle or mechanical chuck) to the calculated component picking position (S340), uses tool 23 (suction nozzle or mechanical chuck) to pick up the supplied component (S350).

Then, job executing section 27 transports the picked up component to the placing preparation position at a transport speed based on the entered component transport speed parameter (S360), and ends component picking processing. In this manner, job executing section 27 causes work robot 20 to perform specified work on a specified component (work) by performing an operation program included in a job while referencing component-use data included in the same job. Fig. 9 shows component picking work. Further, job executing section 27, after moving the picked up component to the placing preparation position, performs work of placing the component at the work position (X, Y) by continuing processing and performing component placing processing, which is not shown, included in the same job.

Fig. 10 is a flowchart showing an example of bolt picking processing. When job executing section 27 performs bolt picking processing, as a tool 23 capable of picking up a bolt, an electromagnetic chuck is attached to a tip section of robot arm 22. The entire body of a bolt is made from magnetic material, and bolts are supplied in a loose form. With bolt picking processing, supplied bolts are picked up one by one by the magnetic chuck attaching to a tip section of the bolt.

When bolt picking processing is performed, job executing section 27, first, performs processing for entering various parameters required for processing such as a shutter speed parameter, an image processing type parameter, an electromagnetic pattern parameter, and a component transport speed parameter (S400). Here, the shutter speed parameter, the image processing type parameter, the electromagnetic pattern parameter, and the component transport speed parameter are entered based on the settings specified in "Shutter speed", "Image processing type", "Electromagnetic pattern", and "Component transport speed" respectively.

Job executing section 27, when this data has been entered, moves imaging camera 28 provided on the tip of the arm to the supplied bolt imaging position (S410), and images the supplied bolt with imaging camera 28 using a shutter speed based on the entered shutter speed parameter (S420).

Next, job executing section 27 calculates the bolt picking position by performing image processing on the captured image based on the entered image processing type parameter (S430). Here, the bolt picking position may be calculated by taking the bolt supply position obtained from the image processing and correcting it by a correction parameter that cancels an error of robot arm 22. Then, job executing section 27, after moving tool 23 (electromagnetic chuck) to the calculated bolt picking position (S440), picks up the supplied bolt with an electromagnetic pattern (magnetic field) based on the entered electromagnetic pattern parameter (S450).

Then, job executing section 27 transports the picked up bolt to the placing preparation position at a transport speed based on the entered component transport speed parameter (S460), and ends bolt picking processing. Fig. 11 shows bolt picking operation. Further, job executing section 27, after moving the picked up bolt to the placing preparation position, performs work of placing (arranging) the bolt at the work position (X, Y) by continuing processing and performing component placing processing, which is not shown, included in the same job.

Fig. 12 is a flowchart showing an example of sticker peeling processing. When job executing section 27 performs sticker peeling processing, as a tool 23 capable of gripping a sponge sticker, a mechanical chuck is attached to a tip section of robot arm 22.

When sticker peeling processing is performed, job executing section 27, first, performs processing for entering various parameters required for processing such as a shutter speed parameter, an image processing type parameter, a peeling angle pattern parameter, a peeling speed parameter, and a component transport speed parameter (S500). Here, the shutter speed parameter, the image processing type parameter, the peeling angle pattern parameter, the peeling speed parameter, and the component transport speed parameter are entered based on the settings specified in "Shutter speed", "Image processing type", "Peeling angle", "Peeling speed", and "Component transport speed" respectively.

Job executing section 27, when this data has been entered, moves imaging camera 28 provided on the tip of the arm to the supplied sticker imaging position (S510), and images the supplied sticker with imaging camera 28 using a shutter speed based on the entered shutter speed parameter (S520).

Next, job executing section 27 calculates the sticker peeling position by performing image processing on the captured image based on the entered image processing type parameter (S530). Here, the sticker peeling position may be calculated by taking the sticker supply position obtained from the image processing and correcting it by a correction parameter that cancels an error of robot arm 22. Then, job executing section 27, after moving tool 23 (mechanical chuck) to the calculated sticker peeling position (S540), picks up the supplied sticker with a peeling angle and a peeling speed based on the entered peeling angle and peeling speed parameters (S550).

Then, job executing section 27 transports the peeled sticker to the placing preparation position at a transport speed based on the entered component transport speed parameter (S560), and ends sticker peeling processing. Fig. 13 shows sticker peeling operation. Further, job executing section 27, after moving the peeled sticker to the placing preparation position, performs work of placing the peeled sticker at the work position (X, Y) by continuing processing and performing component placing processing, which is not shown, included in the same job.

Correspondences between main constituent elements of the embodiments and main constituent elements of the invention will be clarified here. Management device 40 corresponds to a job creating device, memory section 44 corresponds to an operation program memorizing section, input receiving section 42 that receives inputs of component data corresponds to a work-target-related data acquiring section, and job creating section 46 corresponds to a job creating section. Also, input receiving section 42 that receives inputs of work data corresponds to a work-contents-related data acquiring section. Further, work system 10 corresponds to a work system, job receiving sections 25 and 35 correspond to a job acquiring section, and job executing sections 27 and 37 correspond to a job executing section. And, memory sections 26 and 36 correspond to a correction value memorizing section.

Management device 40 of the embodiment described above memorizes an operation program to be performed by work robots 20 and 30 in advance on memory section 44, receives input of component data via input receiving section 42, creates a job including the received component data and the operation program, and sends the job to control devices 24 and 34 of appropriate work robots 20 and 30. Control devices 24 and 34 of work robots 20 and 30 that received the job including the component data and the operation program perform work by executing the operation program while referencing the component data. Accordingly, an operator does not have to change the operation program, even if there is a change to the work target (component data), thus reducing the workload on the operator.

Also, management device 40 of the embodiment memorizes multiple operation programs corresponding to multiple work contents (component data) on memory section 44, receives input of work data via input receiving section 42, selects the operation program corresponding to the received work data from the multiple operation programs memorized on memory section, and creates the job. Accordingly, even if the work contents (work data) are changed, switching of the work contents can be handled smoothly without the need for preparing a separate operation program.

Further, because management device 40 of the embodiment memorizes an operation program to be performed by multiple work robots 20 and 30, and sends a job including component-use data (work data and component data) to the multiple work robots 20 and 30, it is possible to perform all-at-once management of the multiple work robots 20 and 30.

Also, because work system 10 of the embodiment memorizes a correction parameter for correcting an error that will affect the positioning accuracy of robot arms 22 and 32 on control devices 24 and 34 of work robots 20 and 30 respectively, it is not necessary to change an operation program to handle individual variances in work robots 20 and 30.

Meanwhile, it goes without saying that the invention is not limited to the above-mentioned embodiment and various embodiments may be applied within the technical scope of the invention.

For example, in an embodiment above, a work program corresponding to the work contents is memorized on memory section 44, input of component-use data (work data, component data) is received, and a job including the received component-use data and the operation program is sent to control devices 24 and 34 of work robots 20 and 30. However, memory sections 26 and 36 of control devices 24 and 34 may memorize multiple operation programs, management device 40 may create a job not including an operation program, and the job may be sent to control devices 24 and 34 of work robots 20 and 30. In this case, job executing sections 27 and 37 of control devices 24 and 34 may perform the job execution processing shown in fig. 14. When the job execution processing of fig. 14 is performed, job executing sections 27 and 37 determine whether a job has been received (S600). When it is determined that a job has been received, work data is extracted from the received job (S610). Then, job execution sections 27 and 37 select an operation program corresponding to the extracted work data from the multiple memorized operation programs (S620), execute the selected work program (S630), and end job execution processing. In this manner too, an operator is able to cause work robots 20 and 30 to perform appropriate work on a component (work) in accordance with the work contents simply by changing the component-use data (work data, component data). In this case, control devices 24 and 34 of work robots 20 and 30 may memorize correction parameters for correcting an error that affects the positioning accuracy of robot arms 22 and 32.

Further, in the embodiment above, correction parameters for correcting an error that affects the positioning accuracy may be memorized for each of the work robots 20 and 30 in memory sections 26 and 36. However, the correction parameters may also be memorized in memory section 44 of management device 40 and be managed by management device 40. Note that, it is not essential to memorize such correction parameters.

Also, in the embodiment above, management device 40 creates a job for instructing two work robots, 20 and 30, to perform specified work, but the quantity of work robots given instructions may be one, or three or more.

### Industrial Applicability

The present invention may be used, for example, in the industrial field of a job creating device, a work system, or a control device of a manufacturing device such as a work robot.

### Reference Signs List

10: work system;
12: supply device;
13: loading member;
14: conveyance device;
20, 30: work robot;
22, 32: robot arm;
23, 33: tool;
24, 34: control device;
25. 35: job receiving section;
26, 36: memory section;
27, 37: job executing section;
28: imaging camera;
40: management device;
42: input receiving section;
44: memory section;
46: job creating section;
51: keyboard;
52: mouse;
54: display

## Claims

1. A work system (10) comprising
a job creation device (40) for creating a job with work instructions for a work robot (20, 30) configured to perform picking-and-placing work with respect to a work target, and
a work robot control device (24, 34) configured to control the work robot (20, 30) based on the job created by the job creation device (40);
the job creation device (40) comprising:
an operation program memorizing section (44) configured to memorize in advance multiple operation programs corresponding to multiple types of work contents to be performed by the work robot (20, 30), the multiple operation programs being memorized in a state in which it is possible to reference work-target-related data related to the work target of the work robot (20, 30), wherein
the work contents respectively represent a picking or placing command with reference to a work target to be handled;
the work-target-related data is data defining parameters relating to a work target, the parameters relating to a work target including dimensional parameters, imaging parameters, and handling parameters of the work target;
a work-contents-related data acquiring section (42) configured to acquire work-contents-related data related to work contents that should be performed by the work robot (20, 30), wherein
the work-contents-related data is data defining parameters relating to work contents, the parameters relating to the work contents including an operation type of picking and placing, a work target number, and two-dimensional work coordinates;
a work-target-related data acquiring section (42) configured to acquire the work-target-related data; and
a job creating section (46) configured to select an appropriate operation program from the multiple operation programs memorized on the operation program memorizing section (44) based on the work-contents-related data acquired by the work-contents-related data acquiring section (42), to create a job including the selected operation program and the acquired work-target-related data, and to output the job to the work robot control device (24, 34); wherein
the work robot control device (24, 34) includes
a job executing section (27, 37) configured to control the work robot (20, 30) by executing the operation program included in the received job while referencing the work-target-related data.

2. The work system (10) according to claim 1, wherein
the job creating section (46) of the job creating device (40) is configured to create the jobs corresponding to each of multiple of work robots (20, 30) that perform specified work in cooperation with each other, and to output the jobs to the corresponding work robots (20, 30).

3. The work system (10) according to claim 1 or 2; wherein
the work robot control device (24, 34) further includes
a job receiving section (25, 35) configured to receive a job including the operation program and the work-target-related from the job creation device (40).

4. The work system according to claim 3, wherein
the work robot control device (24, 34) further includes a correction value memorizing section (26, 36) configured to memorize a correction value used to adjust a control parameter of the work robot (20, 30).

## Patentansprüche

1. Arbeitssystem (10), das umfasst:
eine Vorrichtung (40) für Erstellung von Aufträgen, mit der ein Auftrag mit Arbeitsanweisungen für einen Arbeitsroboter (20, 30) erstellt wird, der zum Durchführen von Pick-and-Place-Arbeit in Bezug auf ein Arbeits-Objekt konfiguriert ist, sowie eine Vorrichtung (24, 34) zum Steuern des Arbeitsroboters, die so konfiguriert ist, dass sie den Arbeitsroboter (20, 30) auf Basis des durch die Vorrichtung (40) für Erstellung von Aufträgen erstellten Auftrages steuert;
wobei die Vorrichtung (40) für Erstellung von Aufträgen umfasst:
einen Abschnitt (44) zum Speichern von Funktionsprogrammen, der so konfiguriert ist, dass er im Voraus mehrere Funktionsprogramme speichert, die mehreren von dem Arbeitsroboter (20, 30) durchzuführenden Typen von Arbeits-Inhalten entsprechen, wobei die mehreren Funktionsprogramme in einem Zustand gespeichert werden, in dem es möglich ist, auf sich auf ein Arbeits-Objekt beziehende Daten Bezug zu nehmen, die sich auf das Arbeits-Objekt des Arbeitsroboters (20, 30) beziehen, wobei
die Arbeits-Inhalte jeweils einen Pick-and-Place-Befehl in Bezug auf ein zu verarbeitendes Arbeits-Objekt darstellen;
die sich auf ein Arbeits-Objekt beziehenden Daten Daten sind, die Parameter definieren, die sich auf ein Arbeits-Objekt beziehen, wobei die Parameter, die sich auf ein Arbeits-Objekt beziehen, Abmessungs-Parameter, Abbildungs-Parameter und Verarbeitungs-Parameter des Arbeits-Objektes einschließen;
einen Abschnitt (42) zum Erfassen sich auf einen Arbeits-Inhalt beziehender Daten, der so konfiguriert ist, dass er sich auf Arbeits-Inhalt beziehende Daten erfasst, die sich auf Arbeits-Inhalt beziehen, der von dem Arbeitsroboter (20, 30) durchgeführt werden sollte, wobei
die sich auf Arbeits-Inhalt beziehenden Daten Daten sind, die Parameter definieren, die sich auf Arbeits-Inhalt beziehen, und die Parameter, die sich auf den Arbeits-Inhalt beziehen, einen Typ eines Pick-and-Place-Funktionsvorgangs, eine Nummer des Arbeits-Objektes sowie zweidimensionale Arbeits-Koordinaten einschließen;
einen Abschnitt (42) zum Erfassen sich auf ein Arbeits-Objekt beziehender Daten, der so konfiguriert ist, dass er die sich auf ein Arbeits-Objekt beziehenden Daten erfasst; sowie
einen Abschnitt (46) für Erstellung eines Auftrags, der so konfiguriert ist, dass er ein geeignetes Funktionsprogramm aus den mehreren in dem Abschnitt (44) zum Speichern von Funktionsprogrammen gespeicherten Funktionsprogrammen auf Basis der durch den Abschnitt (42) zum Erfassen sich auf Arbeits-Inhalt beziehender Daten erfassten sich auf Arbeits-Inhalt beziehenden Daten auswählt, einen Auftrag erstellt, der das ausgewählte Funktionsprogramm sowie die sich auf ein Arbeits-Objekt beziehenden Daten enthält, und den Auftrag an die Vorrichtung (24, 34) zum Steuern des Arbeitsroboters ausgibt; wobei
die Vorrichtung (24, 34) zum Steuern des Arbeitsroboters einschließt:
einen Abschnitt (27, 37) zum Ausführen eines Auftrags, der so konfiguriert ist, dass er den Arbeitsroboter (20, 30) steuert, indem er das in dem empfangenen Auftrag enthaltene Funktionsprogramm ausführt und dabei auf die sich auf ein Arbeits-Objekt beziehenden Daten Bezug nimmt.

2. Arbeitssystem (10) nach Anspruch 1, wobei
der Abschnitt (46) für Erstellung eines Auftrags der Vorrichtung (40) für Erstellung von Aufträgen so konfiguriert ist, dass er die Aufträge erstellt, die jeweils mehreren Arbeitsrobotern (20, 30) entsprechen, die vorgegebene Arbeit in Kooperation miteinander durchführen, und die Aufträge an die entsprechenden Arbeitsroboter (20, 30) ausgibt.

3. Arbeitssystem (10) nach Anspruch 1 oder 2; wobei
die Vorrichtung (24, 34) zum Steuern des Arbeitsroboters des Weiteren einschließt:
einen Abschnitt (25, 35) zum Empfangen eines Auftrags, der so konfiguriert ist, dass er einen Auftrag, der das Funktionsprogramm sowie die sich auf ein Arbeits-Objekt beziehenden Daten einschließt, von der Vorrichtung (40) für Erstellung von Aufträgen empfängt.

4. Arbeitssystem nach Anspruch 3, wobei
die Vorrichtung (24, 34) zum Steuern des Arbeitsroboters des Weiteren einen Abschnitt (26,36) zum Speichern eines Korrekturwertes einschließt, der so konfiguriert ist, dass er einen Korrekturwert speichert, der zum Einstellen eines Steuerungsparameters des Arbeitsroboters (20, 30) dient.

## Revendications

1. Système de travail (10) comprenant :
un dispositif de création de tâche (40) permettant de créer une tâche avec des instructions de travail destinées à un robot de travail (20, 30) configuré pour effectuer un travail de prélèvement et placement par rapport à une cible de travail, et
un dispositif de commande de robot de travail (24, 34) configuré pour piloter le robot de travail (20, 30) sur la base de la tâche créée par le dispositif de création de tâche (40),
le dispositif de création de tâche (40) comprenant :
une section de mémorisation de programmes d'exploitation (44) configurée pour mémoriser à l'avance de multiples programmes d'exploitation correspondant à de multiples types de contenus d'ouvrage que le robot de travail (20, 30) doit effectuer, les multiples programmes d'exploitation étant mémorisés de telle sorte qu'il soit possible de référencer des données se rapportant à la cible d'ouvrage liées à la cible d'ouvrage du robot de travail (20, 30), où
les contenus d'ouvrage représentent respectivement une instruction de prélèvement ou de placement en faisant référence à une cible d'ouvrage à prendre en charge,
les données se rapportant à la cible d'ouvrage sont des données définissant des paramètres liés à une cible d'ouvrage, les paramètres liés à une cible d'ouvrage incluant des paramètres dimensionnels, des paramètres de mise en image et des paramètres de manipulation de la cible d'ouvrage,
une section d'acquisition de données se rapportant au contenu d'ouvrage (42) configurée pour acquérir des données se rapportant au contenu d'ouvrage concernant les contenus d'ouvrage qui devrait être effectués par le robot de travail (20, 30), où
les données se rapportant au contenu d'ouvrage sont des données définissant des paramètres concernant les contenus d'ouvrage, les paramètres concernant les contenus d'ouvrage incluant le type d'opération de prélèvement et de placement, un numéro cible d'ouvrage et des coordonnées bidimensionnelles d'ouvrage,
une section d'acquisition de données se rapportant à la cible d'ouvrage (42) configurée pour acquérir les données liées à la cible d'ouvrage, et
une section de création de tâche (46) configurée pour sélectionner un programme approprié d'exploitation à partir des multiples programmes d'exploitation mémorisés dans la section de mémorisation de programmes d'exploitation (44) sur la base des données se rapportant au contenu d'ouvrage acquises par la section d'acquisition de données se rapportant au contenu d'ouvrage (42) afin de créer une tâche incluant le programme sélectionné d'exploitation et les données acquises se rapportant à la cible d'ouvrage, ainsi que de fournir la tâche au dispositif de commande de robot de travail (24, 34), où
le dispositif de commande de robot de travail (24, 34) inclut :
une section d'exécution de tâche (27, 37) configurée pour piloter le robot de travail (20, 30) en exécutant le programme d'exploitation inclut dans la tâche reçue tout en faisant référence aux données se rapportant à la cible d'ouvrage.

2. Système de travail (10) selon la revendication 1, dans lequel :
la section de création de tâche (46) du dispositif de création de tâche (40) est configurée pour créer les tâches correspondant à chacun de multiples robots de travail (20, 30) qui effectuent un travail spécifié en coopération avec les autres, ainsi que pour fournir les tâches aux robots de travail (20, 30) correspondants.

3. Système de travail (10) selon la revendication 1 ou la revendication 2, dans lequel :
le dispositif de commande de robot de travail (24, 34) inclut en outre :
une section de réception de tâche (25, 35) configurée pour recevoir une tâche incluant le programme d'exploitation et les données se rapportant à la cible d'ouvrage en provenance du dispositif de création de tâche (40).

4. Système de travail (10) selon la revendication 3, dans lequel :
le dispositif de commande de robot de travail (24, 34) inclut en outre une section de mémorisation de valeur de correction (26, 36) configurée pour mémoriser une valeur de correction utilisée pour ajuster un paramètre de commande du robot de travail (20, 30).
